# EUROPEAN PATENT APPLICATION

(11) **EP 3 570 551 A1**
(43) Date of publication of application: **20.11.2019**
(21) Application number: 18305598.7
(22) Date of filing: 15.05.2018
(51) Int. Cl.: H04N 21/422, H04N 21/485

(54) **APPARATUS AND METHOD FOR SELECTION OF AN AUDIO OUTPUT**

(71) Applicant: InterDigital CE Patent Holdings, 75017 Paris (FR)
(72) Inventor: MORIN, Thomas, 35576 CESSON-SÉVIGNÉ (FR); FRALEU, Sébastien, 35576 CESSON-SÉVIGNÉ (FR); QUERRE, Goulven, 35576 CESSON-SÉVIGNÉ (FR)
(74) Representative: Ståhl, Björn Niclas

(57) **Abstract**

A processor (140) in an apparatus (100) having a plurality of audio output interfaces (111, 112) receives volume commands from a control interface (130) configured to receive commands from a control device (190) comprising at least one volume button (192) enabling two input possibilities. Until a selection of an audio output interface (111, 112) has been validated a volume button command received (S1108) causes selection (S1110) of an audio output interface. Upon validation of the selection of the audio output interface (111, 112), the processor (140) modifies (S1114) an output audio volume for the validated audio output interface (111, 112) in accordance with received volume commands. A first received (S1104) volume command can cause the processor (140) to display (S1106) selectable audio outputs.

## Description

### TECHNICAL FIELD

The present disclosure relates generally to user control of audio output and in particular to such control for apparatuses with a plurality of audio outputs.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Certain devices for consuming audio and audiovisual content provide a plurality of audio outputs. An example of such a device is a decoder with a first audio output for connection, via HDMI, to a television, soundbar or the like and a second audio output via a jack to for instance headphones, while a third audio output could be a Bluetooth™ interface.

Such a device is typically accompanied by a conventional remote control with one volume control button that pivots to enable increasing the audio level when pressed at one end of the button and to decrease the audio level when pressed at the other end or, alternatively, two separate volume control buttons, one to increase the audio level and one to decrease it.

A problem with such a device/remote control combination is that it can be complicated to change the audio level of a given audio output since there are more than one of them. Thus, conventional solutions typically include menus in which, somewhere down a menu tree, audio output selection is enabled. Such a menu tree can be complicated to navigate.

The problem is typically present to a greater extent when interacting directly with the device through an integrated user interface, since the user interface often is less extensive than that of the remote control.

It will thus be appreciated that there is a desire for a solution that addresses at least some of the shortcomings of audio output selection. The present principles provide such a solution.

### SUMMARY OF DISCLOSURE

In a first aspect, the present principles are directed to an apparatus including a plurality of audio output interfaces, a control interface configured to receive commands from a control device comprising at least one volume button enabling two input possibilities, the commands comprising volume button commands, and at least one hardware processor configured to receive the commands from the control interface, if no audio output interface selection has been validated for volume control, select an audio output interface based on the volume commands received until audio output interface selection has been validated, and if an audio output interface selection has been validated for volume control, modify an output audio volume for the selected audio output interface in accordance with received volume commands.

In a second aspect, the present principles are directed to a method at an apparatus having a plurality of audio output interfaces. At least one hardware processor of the apparatus iteratively until a selection of an audio output interface has been validated receives a volume button command from a control interface configured to receive commands from a control device including at least one volume button (192) enabling two input possibilities and selects an audio output interface in response to the volume button command, and, upon validation of the selection of the audio output interface, modifies an output audio volume for the audio output interface in accordance with received volume commands.

In a third aspect, the present principles are directed to a computer program including program code instructions executable by a processor for implementing the steps of a method according to any embodiment of the second aspect.

In a fourth aspect, the present principles are directed to a computer program product which is stored on a non-transitory computer readable medium and includes program code instructions executable by a processor for implementing the steps of a method according to any embodiment of the second aspect.

### BRIEF DESCRIPTION OF DRAWINGS

Features of the present principles will now be described, by way of non-limiting example, with reference to the accompanying drawings, in which:
Figure 1 illustrates an apparatus with multiple audio outputs according to the present principles;
Figure 2 illustrates a method for selecting an audio output in an apparatus including two audio outputs according to the present principles;
Figure 3 illustrates a method for selecting an audio output in an apparatus including at least two audio outputs according to the present principles;
Figures 4-6 illustrate a first exemple scenario with a screen displaying user interfaces for an apparatus with two audio outputs;
Figures 7-10 illustrate a second exemple scenario with a screen displaying user interfaces for an apparatus with three audio outputs; and
Figure 11 illustrates the methods of embodiments of Figures 2 and 3 differently.

### DESCRIPTION OF EMBODIMENTS

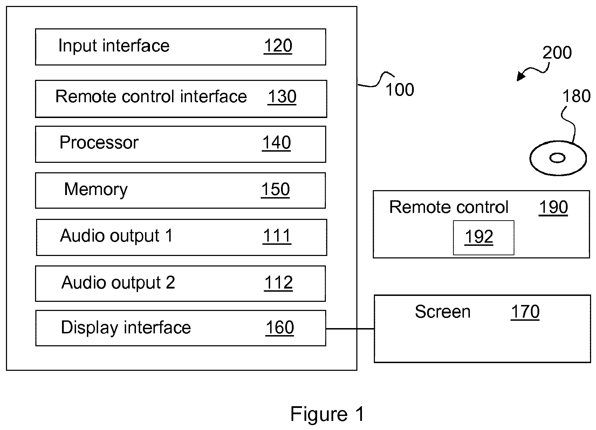

Figure 1 illustrates an apparatus 100 with a plurality of audio outputs 111, 112 according to the present principles. The apparatus 100, which can be a television or, in a non-limitative example used herein, a decoder, includes an input interface 120 configured to receive audio or audiovisual content for rendering, a remote control interface 130 configured to receive commands from a remote control 190, at least one hardware processor ("processor" hereinafter in the description) 140 configured to process content and to control the apparatus, a memory 150 configured to store program code instructions that when executed by the processor 140 enables selection of the audio output as will be further explained hereinafter, a first audio output 111, a second audio output 112 and a display (e.g. video) interface 160 configured to output at least one of images and video on a screen 170 (that can be, but not necessarily is, part of the apparatus 100). In one embodiment, the first audio output 111 and the display interface 160 are implemented in a single physical interface, such as a HDMI or SCART interface.

The remote control 190 can include two separate volume buttons (one to cause transmission of at least one command to increase the volume, the other to cause transmission of at least one command to decrease the volume; typically) or a single pivoting volume button 192, as already explained. In the following description, "volume button" is intended to include both of these possibilities. Typically, the remote control 190 also includes a "Mute" button to allow the user to mute and unmute the apparatus 100. The skilled person will appreciate that the present principles also apply to an apparatus with integrated volume control buttons, i.e. with an integrated control device.

The first audio output 111 and the second audio output 112 can be implemented using any suitable technology; the audio outputs may for example be implemented as HDMI, SCART or Bluetooth™ interfaces.

Non-transitory computer-readable medium 180 stores the program code instructions that, when executed by a processor, implement the steps of at least one of the methods according to the present principles.

Generally speaking, according to the present principles, the apparatus 100 interprets at least one first volume button command as instructions for selection of audio output and at least one second volume button command as instructions to set the output volume for the selected audio output. In an embodiment of the present principles, the apparatus 100 interprets a preceding third volume button command as an instruction to enable selection of audio output, for example by activation of an interface displaying selectable audio outputs.

In an embodiment, the apparatus 100 provides a user interface such as a menu in a menu tree (not shown) that enables a user to set the audio outputs that may be selected via the volume button. For example, in case the apparatus includes three audio outputs - say, a HDMI interface connected to a television, a jack for connection to headphones, and a Bluetooth™ interface - then the user can select and deselect audio outputs to be selected using the present principles. This way, if the user never uses the headphones but only using the television speakers or a device connected to the Bluetooth™, the jack can be deselected so that only the other two audio interfaces can be selected using the present principles until the user gives instructions to enable selection of the jack. The user interface can also be used by the user to control whether or not selectable audio outputs shall be displayed.

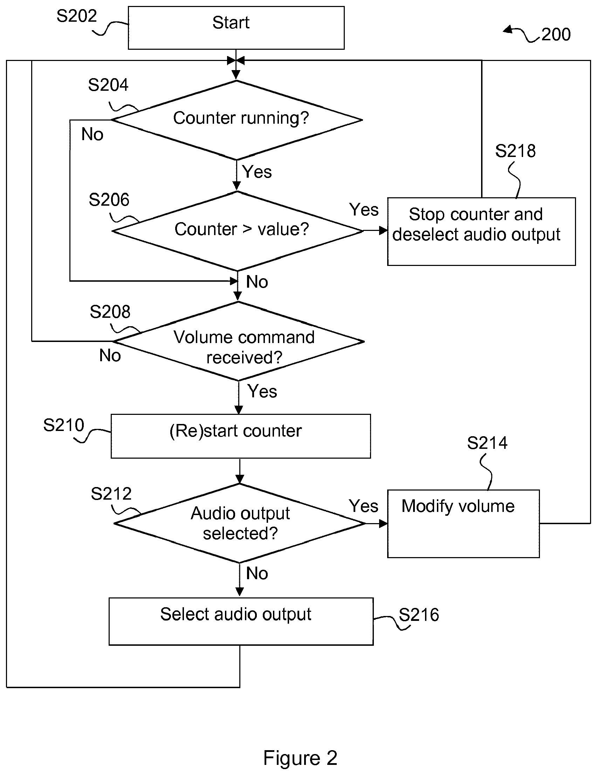

Figure 2 illustrates a method 200 for selecting an audio output in an apparatus including two audio outputs according to the present principles. The method is performed by the processor 140.

As already mentioned, briefly speaking, the method takes initial user volume button commands as steps towards a selection of the audio output and further volume button commands as commands to increase or decrease the audio level for the selected audio output.

The method starts in step S202. At this point, it is considered that no commands have been received and that no counters are running.

In step S204, the processor 140 checks if it is running a counter. The counter can be incremental or decremental (i.e. a timer).

If no counter is running, in step S208 the processor 140 checks if it has received, via the remote control interface 120, a command related to the volume button; in other words, if the user has pressed the volume button. The command is typically one of increase (+) or decrease (-). In a preferred embodiment, each command includes a single command, i.e. increase or decrease one 'step'. In an alternative embodiment, the command can include a plurality of repeated commands, such as may be the case when the keeps pressing the volume control button.

In case no such command has been received, the method returns to step S204.

If a command related to the volume button has been received, the processor 140 starts a counter in step S210; if the counter is already running, it is reset and started. Then, in step S212, the processor 140 checks if it previously has received an audio output selection from the user via the remote control interface 130; i.e. if the user has selected an audio output.

If an audio output has been selected the output audio level, i.e. the volume, is modified, in step S214, in accordance with the received command (increase or decrease) for the selected audio output after which the method returns to step S204. The audio level, possibly accompanied by an indication such as a symbol of the selected audio output, can be displayed to the user via the display interface 160.

If no audio input has been selected, the command is taken as a command to audio output selection in step S216. Step S216 is slightly different depending on whether the selectable audio outputs shall be displayed or not; in particular for only two audio outputs a user can quickly learn how to select which audio output without the aid of an interface and the audio output selection can then be quicker.

In case no interface is to display the selectable audio outputs, the processor 140 interprets the received command as a selection of the audio input. Since there are only two possible audio outputs in the method illustrated in Figure 2 and there are two possible volume commands (increase and decrease), each command can be associated with a specific audio output.

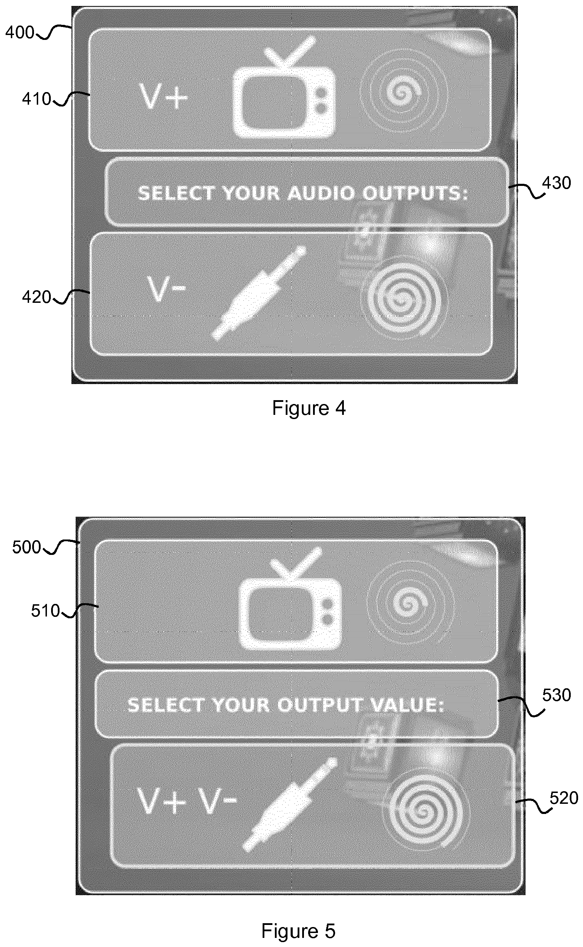

However, in case an interface is to display the selectable audio outputs, the command is taken as an instruction to display the selectable audio outputs, for example by displaying a list of the two audio outputs. Then the processor 140 interprets further volume button commands as selection input. Each audio output is preferably associated with a different volume button choice ('+' / '-'; 'V+' / 'V-'; or similar) so that one command '+' selects one and the other command '-' selects the other. This is illustrated in Figure 4.

If, in step S204, it is determined by the processor 140 that a counter is running, then the method proceeds to step S206 in which the processor determines if the counter has reached a determined value (typically corresponding to a given time). If the counter has not reached the determined value, the method proceeds to already described step S208.

However, if the counter has reached the determined value, the method moves to step S218 in which the processor 140 stops (and resets) the counter, closes any volume related display (e.g. the list enabling selection of the audio output) and, possibly, deselects a selected audio output. Then the method goes to already described step S204.

As can be seen, the method enables a user to use the volume button to first select the audio output and then modify the volume of the selected audio output.

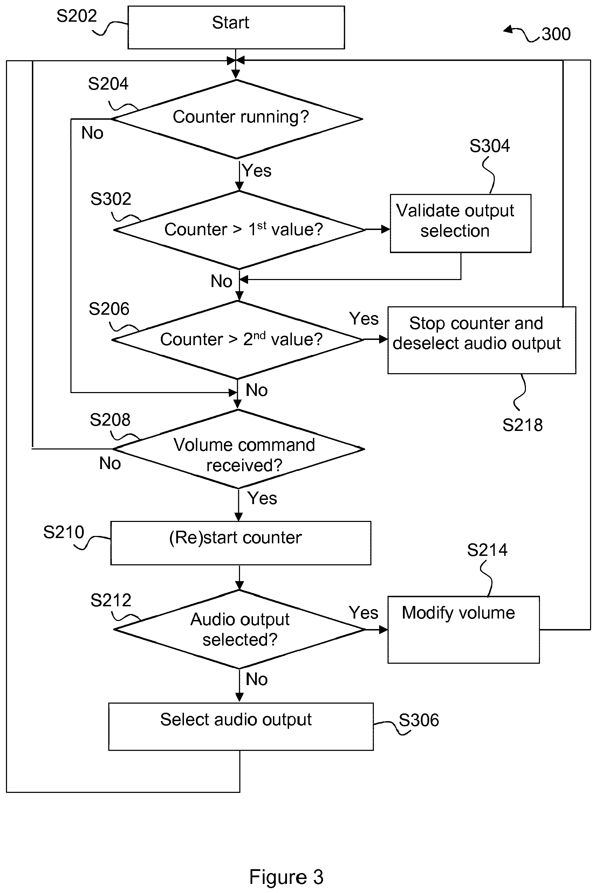

Figure 3 illustrates a method 300 for selecting an audio output in an apparatus including at least two audio outputs according to the present principles. Many steps of the method are similar or identical to those of the method illustrated in Figure 2; these steps have the same numbers and will only be described briefly, as necessary. The method is performed by the processor 140.

The method starts in step S202 and moves to step S204 in which the processor 140 determines if the counter is running. If the counter is not running, the method goes to step S208, as in Figure 2.

If the counter is running, the method proceeds in step S302, where the processor 140 determines if the counter has reached a first value. The first value is such that it will be reached before the value ("second value") in step S206.

In case the first value has been reached, in step S304, the audio output currently selected in the user interface is validated as the selection of the audio output and the method continues to step S206 in which the counter is compared with the second value to determine if the method should continue with step S218 or S208.

In step S208, it is determined if volume button command has been received and, if so, the counter is started (or reset and started) in step S210 before the determination in step S212 whether the selection of the audio output has validated. If so, the volume is modified in step S214 before the method goes back to step S204.

If not, the method moves to step S306 in which the processor 140 interprets a first received volume button command as an instruction to display a list of selectable audio outputs and further volume button commands as instructions to select a (different) audio output in the displayed list of audio outputs. The method then moves back to step S204.

Similar to the method illustrated in Figure 2, the method in Figure 3 can do without displaying selectable audio outputs, in which case the first volume button command received in step S306 is interpreted as a first selection.

Since the volume button can cause two different commands, it is also possible for the processor 140 to interpret the first volume button command received in step S306 as both a command to display possible audio outputs and as a first selection, with different selections made depending on which of the two volume button commands was received.

The skilled person will appreciate that instead of, or in addition to, the counter in step S302 that is used to validate a selection, the processor 140 may interpret different input from the remote control 190 such as input corresponding to an "OK" button or similar as an instruction to validate the audio output selection.

The skilled person will appreciate that the method illustrated in Figure 2 may be better suited when there are only two audio outputs since it can be made quicker (as audio output selection can also validate the selection).

It will also be appreciated that once the audio output has been selected as described herein, it is also possible for the apparatus to receive instructions to mute the audio output (the instructions originating from the remote control 190) and mute the audio output in response thereto.

For consistency between the methods in Figure 2 and Figure 3, it can be considered that 'selection', 'selected' etc. of an audio output in Figure 2 includes 'validation', 'validated' and so on.

Figures 4-6 illustrate a first exemple scenario with a screen displaying user interfaces for an apparatus with two audio outputs.

Figure 4 illustrates the user interface 400 with icons 410, 420 for the two audio outputs and an indication 430 to select an audio output. As can be seen, the audio output connected to the television is associated with the 'V+' button while the jack is associated with the 'V-' button. Each icon 410, 420 indicates the current audio level (i.e. volume) for the audio outputs. This can correspond to step S216 in Figure 2.

Figure 5 illustrates a user interface 500 after user selection of the jack. The 'television' audio output icon 510 is still visible (slightly modified), but cannot be selected, i.e. no volume button is associated with it. An indication 530 invites a user to select the audio level, "output value". The jack audio output icon 520 is slightly modified to indicate that both volume button options are associated with it, respectively to increase and decrease the volume. This can correspond to step S214 in Figure 2.

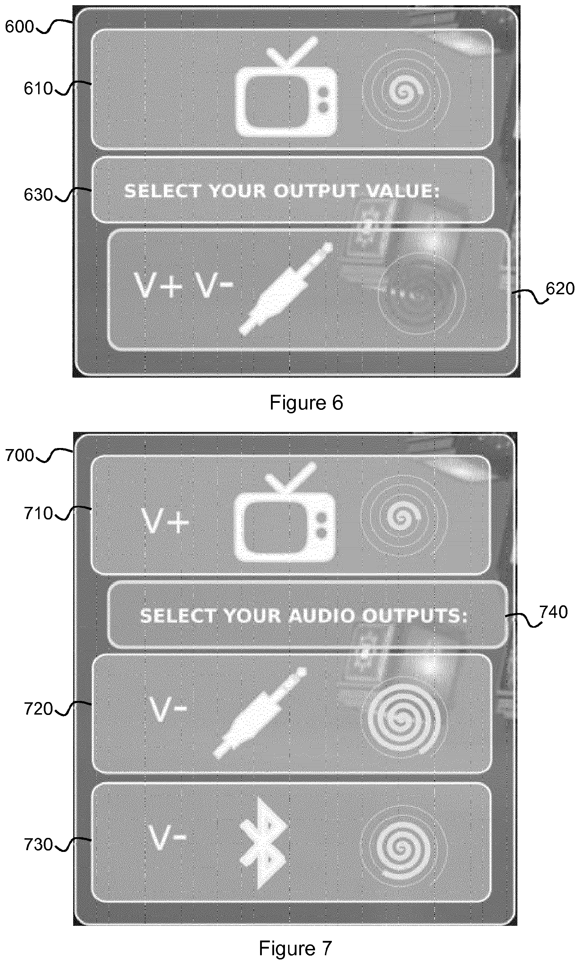

Figure 6 illustrates the user interface 600 once the user has decreased the volume for the jack. As can be seen, the 'television' audio output icon 610 remains unchanged, as does the indication 630 to select the volume. The 'jack' icon 620 still shows both volume buttons 'V+' and 'V-', the jack image, but the volume 'spiral' now indicates that the volume is at its minimum. This, too, can correspond to step S214 in Figure 2; the user can continue to set the desired volume.

Figures 7-10 illustrate a second exemple scenario with a screen displaying user interfaces for an apparatus with three audio outputs.

Figure 7 illustrates a user interface 700 with icons 710, 720, 730 for the three audio outputs and an indication 740 to select an audio output. As can be seen, the indication 740 has the cursor (indicated by a slight deplacement), while audio output connected to the television is associated with the 'V+' button (i.e. go up to select it) while the jack and the Bluetooth™ are associated with the 'V-' button (i.e. go down once or twice to select these audio outpurs). Each icon 710, 720, 730 indicates the current audio level (i.e. volume) for the audio outputs. This can correspond to step S306 in Figure 3.

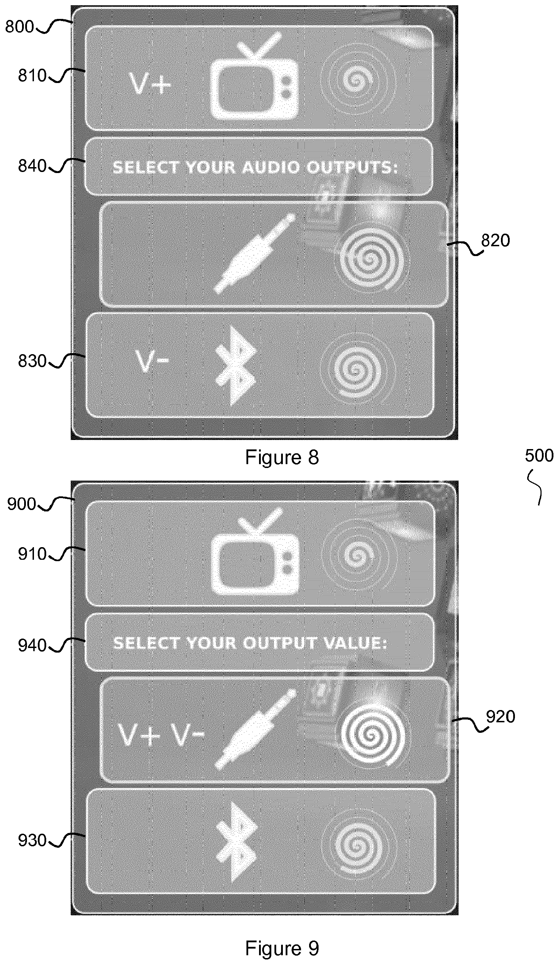

Figure 8 illustrates a user interface 800 after user selection of the jack, i.e. icon 820. As the selection has not yet been validated (step S304 in Figure 3), it is still possible to move up to select the 'television' audio output icon 810 (as indicated by 'V+') and down to select the Bluetooth™ audio output icon 830 (as indicated by 'V-'). The indication 840 to select the audio output is still visible. The jack audio output icon 820 is slightly modified by including no volume button sign to indicate that it is currently selected. This, too, can correspond to step S306 in Figure 3.

Figure 9 illustrates the user interface 900 after validation of the selection of the jack audio output (in step S304 in Figure 3). As in Figure 5, the other audio output icons 910, 930 are visible, but cannot be selected, and the user interface 900 includes an invitation 940 to set the volume ("output value"). As can be seen, the 'jack' icon 920 includes both volume buttons 'V+' and 'V-', the jack image and an indication of the set volume, which is at its maximum. This can correspond to step S214 in Figure 3.

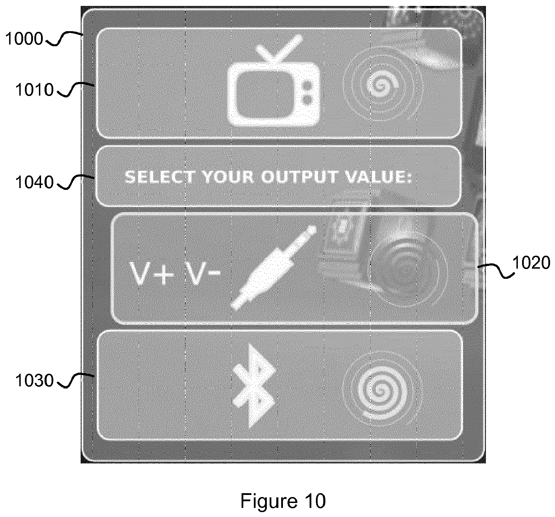

Figure 10 illustrates the screen once the user has decreased the volume for the jack.

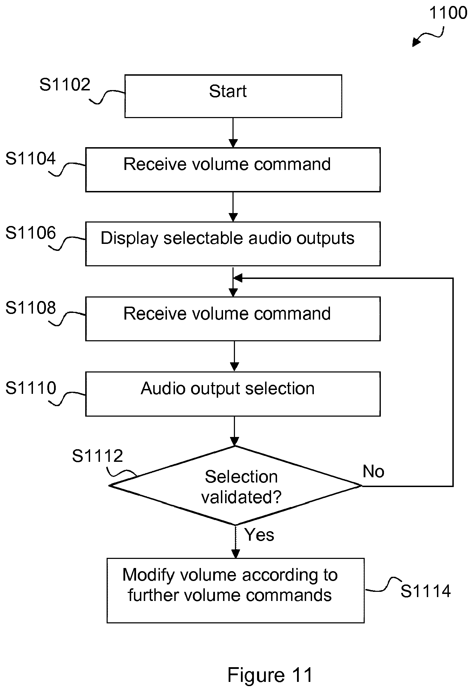

Figure 11 illustrates the methods of embodiments of Figures 2 and 3 differently. It follows that the method illustrated in Figure 11 is performed by the apparatus 100 that performs the methods illustrated in Figures 2 and 3.

The method 1100 starts in step S1102. In optional step S1104, the processor 140 receives a volume command and in response thereto displays selectable audio outputs in optional, but preferred, step S1106. As already mentioned, the command received in step 1104 can also be interpreted by the processor 140 as a selection of an audio output (and also, in the case of two possible audio outputs, as a validation of the selection).

In step S1108, the processor 140 receives a volume command that in step S1110 is interpreted as a selection of an audio output (and, in the case of only two audio outputs, possibly also as a validation thereof).

As already mentioned, the selection of an audio output can be validated in different ways. Until the selection has been validated, steps S1108 and S1110 are iterated.

Once the selection has been validated, the processor 140 modifies, in step S1114, the volume of the selected audio output according to further received volume commands.

It will thus be appreciated that the present principles can provide volume control for a plurality of audio outputs using only the volume buttons of a conventional remote control.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. An apparatus comprising:
a plurality of audio output interfaces;
a control interface configured to receive commands from a control device comprising at least one volume button enabling two input possibilities, the commands comprising volume button commands; and
at least one hardware processor configured to:
receive the commands from the control interface;
if no audio output interface selection has been validated for volume control, select an audio output interface based on the volume commands received until audio output interface selection has been validated; and
if an audio output interface selection has been validated for volume control, modify an output audio volume for the selected audio output interface in accordance with received volume commands.

2. The apparatus of claim 1, wherein the at least one hardware processor is further configured to deselect an audio output interface in case no a given time passes without reception of further volume commands.

3. The apparatus of claim 1 or 2, wherein the at least one hardware processor is further configured to, upon reception of a first received volume command, display, via a display interface, identifiers of selectable audio output interfaces.

4. The apparatus of claim 3, wherein the at least one hardware processor is configured to interpret the first received volume command as a selection of an audio output interface.

5. The apparatus of any previous claim, wherein the at least one hardware processor is configured to validate the audio output interface selection after a given time without reception of further volume commands.

6. The apparatus of any previous claim, wherein the at least one hardware processor is configured to validate the audio output interface selection upon reception from the control interface of a specific command different from the volume commands.

7. The apparatus of any one of claims 1-4, wherein the apparatus includes two selectable audio output interfaces and the at least one hardware processor is configured to interpret a selection of an audio output interface also as a validation of the selection.

8. The apparatus of any previous claim, wherein the at least one hardware processor is configured to, upon validation of an audio output interface selection, display via the display interface an indication of the validated audio output interface and a corresponding present audio output volume.

9. A method at an apparatus having a plurality of audio output interfaces, the method, performed by at least one hardware processor of the apparatus, comprising:
until a selection of an audio output interface has been validated, iteratively:
receiving a volume button command from a control interface configured to receive commands from a control device comprising at least one volume button enabling two input possibilities; and
selecting an audio output interface in response to the volume button command; and
upon validation of the selection of the audio output interface:
modifying an output audio volume for the audio output interface in accordance with received volume commands.

10. The method of claim 9, further comprising, before receiving the volume button command:
receiving a first volume button command; and
in response to the first volume button command, sending identifiers of selectable audio output interfaces to a display interface for display on a screen.

11. The method of claim 9, further comprising deselecting an audio output interface in case no a given time passes without reception of further volume commands.

12. The method of claim 9, wherein the apparatus includes two selectable audio output interfaces and selection of an audio output interface also validates the selection.

13. The method of claim 9, further comprising, upon validation of an audio output interface selection, displaying via the display interface an indication of the validated audio output interface and a corresponding present audio output volume.

14. Computer program comprising program code instructions executable by a processor for implementing the steps of a method according to at least one of claims 9-13.

15. A non-transitory computer readable medium storing program code instructions that, when executed by a processor, implement the steps of a method according to at least one of claims 9-13.
